Europäisches Patentamt

European Patent Office

Office européen des brevets

(11) Veröffentlichungsnummer: **0 332 827 B1**

(12) **EUROPÄISCHE PATENTSCHRIFT**

(45) Veröffentlichungstag der Patentschrift: **11.11.92**

(21) Anmeldenummer: **89101668.5**

(22) Anmeldetag: **01.02.89**

(51) Int. Cl.⁵: **B60G 17/04**

(54) **Luftfederungsanlage.**

(30) Priorität: **12.03.88 DE 3808395**

(43) Veröffentlichungstag der Anmeldung:
**20.09.89 Patentblatt 89/38**

(45) Bekanntmachung des Hinweises auf die
Patenterteilung:
**11.11.92 Patentblatt 92/46**

(84) Benannte Vertragsstaaten:
**DE FR GB IT SE**

(56) Entgegenhaltungen:
**DE-A- 3 300 662**
**DE-A- 3 502 337**

**PATENT ABSTRACTS OF JAPAN, Band 12,
Nr. 142 (M-692)[2989], 30. April 1988; & JP-
A-62 265 010 (MITSUBISHI MOTORS CORP.)
17-11-1987**

**PATENT ABSTRACTS OF JAPAN, Band 11,
Nr. 225 (M-609)[2672], 22. Juni 1987; & JP-
A-62 39 313 (MAZDA MOTOR CORP.)
20-02-1987**

**IEEE TRANSACTIONS ON INDUSTRIAL ELEC-
TRONICS, Band 35, Nr. 2, Mai 1988, Seiten
193-200, IEEE, New York, US; M. HIROSE et**

**al.: "Toyota electronic modulated air suspension system for the 1986 soarer"**

(73) Patentinhaber: **ROBERT BOSCH GMBH
Postfach 30 02 20
W-7000 Stuttgart 30(DE)**

(72) Erfinder: **Fahrnschon, Matthias, Dipl.-Ing.
Koenigstrasse 73
W-6740 Landau(DE)**
Erfinder: **Zehaczek, Helmut, Dipl.-Ing.
Bergstrasse 4
W-7101 Eberstadt(DE)**

EP 0 332 827 B1

## Beschreibung

Die Erfindung bezieht sich auf eine Luftfederungsanlage nach der Gattung des Hauptanspruchs. Eine derartige Luftfederungsanlage ist bekannt (DE-OS 33 00 662).

Bei solchen bekannten Luftfederungsanlagen kann es vorkommen, daß während der Fahrt eine balgseitige Undichtheit nicht erkannt wird. Dadurch können sich ankündigende größere Defekte, wie z.B. Balgplatzer nicht frühzeitig erkannt werden. Außerdem wird der Kompressor über Gebühr belastet, ohne daß es der Fahrer merkt. Das führt zu einem frühen Verschleiß des Druckerzeugers.

Die DE-A-35 02 337 zeigt eine Fahrzeugfederung mit einer Steuerungseinheit, die die Anzahl der Einschaltvorgänge prüft, ob diese gleich oder größer als eine Bezugszahl (beispielsweise 3) sind. Jedoch auch diese Fahrzeugfederung bietet keine Möglichkeit, eine unzulässige Undichtheit eines Luftfederelementes zu erkennen.

Die Luftfederungsanlage mit den kennzeichnenden Merkmalen des Hauptanspruchs hat demgegenüber den Vorteil, daß eine balgseitige Undichtheit während der Fahrt erkennbar ist. Durch das frühe Erkennen und Beseitigen einer Leckage können eine sich ständig ändernde Radlastverteilung und sich ankündigende, größere Defekte vermieden werden. Weiterhin ist es von Vorteil, daß die Laufzeit des Kompressors auf das notwendige Maß begrenzt werden kann. Damit ist dann eine günstigere Kilometer-Leistung des Kompressors erreicht.

## Zeichnung

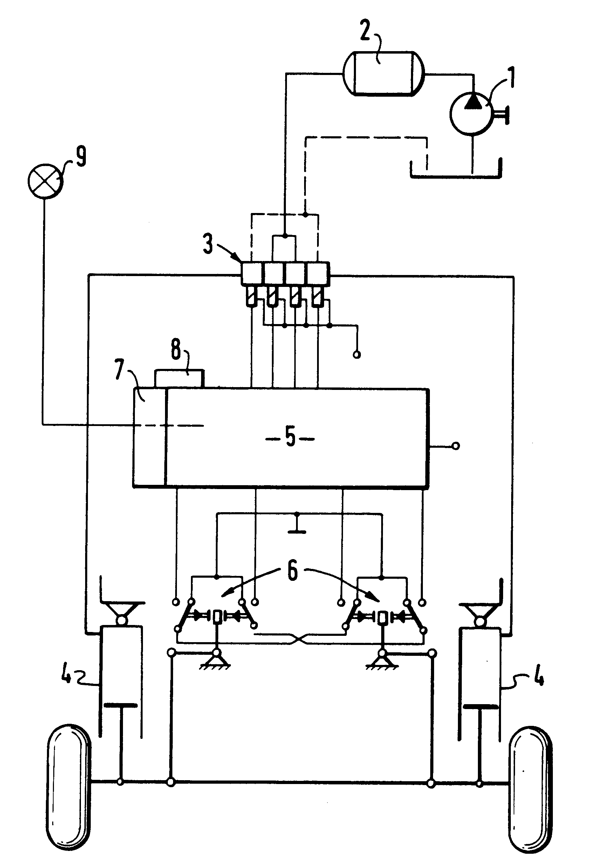

Ein Ausführungsbeispiel der Erfindung ist in der Zeichnung dargestellt und in der nachfolgenden Beschreibung näher erläutert.

## Beschreibung des Ausführungsbeispiels

Ein Kraftfahrzeug ist mit einer Luftfederungsanlage ausgerüstet. Diese besteht im wesentlichen aus einem Kompressor 1, der über einen Vorratsbehälter 2 mehrere Niveauregelventile 3 mit Druckluft versorgt. Die Niveauregelventile 3 sind pneumatisch an Luftfederelemente 4 und elektrisch an eine elektronische Steuereinrichtung 5 angeschlossen, die ihre Signale von Niveausensoren 6 erhält und die daraufhin die Niveauregelventile 3 entsprechend ansteuert.

Gemäß der Erfindung ist nun mit der elektronischen Steuereinrichtung 5 eine Zähleinrichtung 7 gekoppelt, die die Anzahl der Belüftungsvorgänge in einem der beiden dargestellten Regelkreise zählt (linke und rechte Fahrzeugseite). Außerdem sind auch noch eine Vergleichseinrichtung 8 und ein Störmelder in Form einer Warnlampe 9 vorgesehen.

## Wirkungsweise

Beim Stillstand des Fahrzeuges und ausgeschalteter Zündung ist auch die elektronische Steuereinrichtung 5 ausgeschaltet.

Bei eingeschalteter Zündung, sowohl im Stand, als auch im Fahrbetrieb, arbeitet die Luftfederungsanlage, und die elektronische Steuereinrichtung 5 erhält Signale von den Niveausensoren 6, um die Niveauregelventile 3 anzusteuern und die Luftfederelemente 4 entsprechend mit Druckluft zu versorgen.

Im Stand werden die Signale nicht gezählt, da aufgrund eines fortlaufenden, eventuell einseitigen Be- und Entladevorganges von der elektronischen Steuereinrichtung ein Fehler an einen Balg angenommen werden würde.

Die Zähleinrichtung 7 zählt aber ab einer bestimmten Fahrgeschwindigkeit (z.B. 6 km/h) diese Signale für die Anzahl der Belüftungsvorgänge in dem der linken und der rechten Fahrzeugseite zugeordneten linken und rechten Regelkreis, getrennt für jeden Kreis. Nur während der Fahrt ist eine Zuordnung der Regelhäufigkeit zur Undichtheit eindeutig, da während der Fahrt nicht Be- oder Entladen wird.

Die Vergleichseinrichtung 8 vergleicht die Häufigkeit der gezählten Belüftungsvorgänge in einer Zeiteinheit miteinander. Wird dabei festgestellt, daß die Belüftungsvorgänge in dem einen Regelkreis auffallend mehr sind als im anderen Regelkreis dann wird die Warnlampe 9 eingeschaltet. Der Fahrer erkennt an dem Aufleuchten der Lampe 9, daß in einem Regelkreis etwas nicht in Ordnung ist, sehr wahrscheinlich ein Leck aufgetreten ist; er kann anhalten und die Anlage, insbesondere das linke und rechte Luftfederelement auf einen Schaden prüfen.

Auf diese Weise wird erreicht, daß der Kompressor geschont wird und daß Unfälle durch ein Balgplatzen verhindert werden.

## Patentansprüche

1. Luftfederungsanlage für Fahrzeuge, insbesondere für Kraftfahrzeuge, mit einem Kompressor (1), mindestens einem Niveauregelventil und den Fahrzeugachsen zugeordneten Luftfederelementen (4) zum federnden Abstützen des Wagenkastens gegenüber den Fahrzeugachsen, sowie mit einer elektronischen Steuereinrichtung (5) zum Empfang von Niveausensor-Signalen und deren Verarbeitung und zur entsprechenden Ansteuerung des mindestens einen in einem Regelkreis angeordneten Niveauregelventils (3), wobei der elektronischen Steuereinrichtung (5) eine Zähleinrichtung (7) für die Anzahl von Belüftungsvorgängen in mindestens zwei Regelkreisen zugeordnet ist und wobei eine Vergleichseinrichtung (8) vorgesehen ist, dadurch gekennzeichnet, daß die Vergleichseinrichtung (8) die Häufigkeit der Belüftungsvorgänge der Regelkreise miteinander vergleicht, wobei bei einem bestimmten Abweichungswert ein Warnsignal von der elektronischen Steuereinrichtung (5) auslösbar ist.

2. Luftfederungsanlage nach Anspruch 1, dadurch gekennzeichnet, daß einer der Regelkreise der linken Fahrzeugseite und einer der Regelkreise der rechten Fahrzeugseite zugeordnet ist.

3. Luftfederungsanlage nach Anspruch 1, dadurch gekennzeichnet, daß das Warnsignal von der elektronischen Steuereinrichtung (5) einem Störmelder (9) zuführbar ist.

**Claims**

1. Air suspension system for vehicles, in particular for motor vehicles, having a compressor (1), at least one level-control valve and air suspension elements (4), assigned to the vehicle axles, for resiliently supporting the car body in relation to the vehicle axles, and having an electronic control device (5) for receiving level-sensor signals and processing them and for correspondingly driving the at least one level-control valve (3) disposed in a control circuit, a counting device (7) for the number of ventilation cycles in at least two control circuits being assigned to the electronic control device (5) and a comparison device (8) being provided, characterised in that the comparison device (8) compares the frequency of the ventilation cycles of the control circuits with each other, a warning signal being able to be triggered by the control device (5) if a certain deviation value is obtained.

2. Air suspension system according to Claim 1, characterised in that one of the control circuits is assigned to the left vehicle side and one of the control circuits to the right vehicle side.

3. Air suspension system according to Claim 1, characterized in that the warning signal from the electronic control device (5) can be fed to a fault indicator (9).

**Revendications**

1. Dispositif de suspension pneumatique pour véhicules notamment véhicules automobiles, comportant un compresseur (1), au moins une soupape de régulation d'assiette et des éléments de suspension pneumatique (4) associés aux essieux du véhicule pour suspendre de manière élastique la carrosserie du véhicule par rapport aux essieux ainsi qu'une installation de commande électronique (5) recevant les signaux des capteurs d'assiette et les traitant pour commander de manière correspondante, au moins une soupape de régulation d'assiette (3) équipant un circuit de régulation, l'installation de commande électronique (5) comporte une installation de comptage (7) du nombre d'opérations d'alimentation en air dans au moins deux circuits de régulation, ainsi qu'une installation de comparaison (8), dispositif de suspension, caractérisé en ce que l'installation de comparaison (8) compare entre elles la fréquence des opérations d'alimentation d'air des circuits de régulation et l'installation de commande électronique (5) déclenche un signal avertisseur pour une certaine valeur de différence.

2. Dispositif de suspension pneumatique selon la revendication 1, caractérisé en ce que l'un des circuits de régulation du côté gauche du véhicule et l'un des circuits de régulation du côté droit du véhicule sont associés.

3. Dispositif de suspension pneumatique selon la revendication 1, caractérisé en ce que le signal avertisseur est fourni par l'installation de commande électronique (5) à un dispositif signalant les incidents (9).